# EUROPEAN PATENT APPLICATION

(11) **EP 4 799 866 A1**
(43) Date of publication of application: **02.09.2026**
(21) Application number: 25160796.6
(22) Date of filing: 28.02.2025
(51) Int. Cl.: B60R 1/04

(54) **INDOOR REAR-VIEW MIRROR**

(71) Applicant: Olle Liss Holding AB, 791 72 Falun (SE)
(72) Inventor: LISS, Olle, FALUN (SE)
(74) Representative: Bjerkén Hynell KB

(57) **Abstract**

This invention relates to an indoor rear-view mirror (1) for use within a vehicle, comprising a holding part (2) and a mirror part (3), which are arranged to be attached to each other, wherein said mirror part (3) comprises a mirror side (32) and a rear side (34) and said holding part (2) comprises a clamping member (26) arranged to be attached to a part (40, 41) of said vehicle (4), wherein said clamping member (26) is arranged to be attached to said vehicle (4) by being clamped by means of a side window (40).

## Description

### TECHNICAL FIELD

This invention relates to an indoor rear-view mirror for use within a vehicle, comprising a holding part and a mirror part, which are arranged to be attached to each other, wherein said mirror part comprises a mirror side and a rear side and said holding part comprises a clamping member arranged to be attached to a part of said vehicle.

### BACKGROUND

In some situations, there is a need for the passenger sitting beside the driver to also use a rear-view mirror to keep control of what is happening behind a vehicle. For instance, this is the case when the driver is learning. As is evident it is then need for the passenger to keep control of the situation how to handle the vehicle, e.g. to be able to observe if an emergency vehicle is approaching from behind. Many different solutions are known to achieve the above, mostly by means of releasably or fixedly attaching a rear mirror onto the sun shield within the vehicle, e.g. as known from WO2018084814. However, this may not always be the most desired position and may not always be optimal, e.g. stealing the sight from a forward view for the person on the passenger side and also from a side view for the driver.

Further there are known releasably externally attached rear-view mirrors, e.g. as shown in DE 2745316. However, arrangements that are externally attached, i.e. at the outside of a vehicle will be exposed to speed wind and will therefore require a very rigid and costly design.

### SUMMARY OF THE INVENTION

It is an object of the invention to minimize the above-mentioned problem which is achieved by a rear view mirror arrangement in accordance with claim 1.

Thanks to the invention a rear mirror is easily attached within the vehicle at the passenger side at a position that will not inflict on the forward view from a control perspective for the passenger.

Further aspects according to the invention will become apparent in the following description of a preferred embodiment.

### BRIEF DESCRIPTION OF THE FIGURES

Fig.1 shows a schematic perspective view of a rear mirror attached and within a vehicle in accordance with a first embodiment of the invention,
Fig. 2 shows a perspective view at the front of the holding part of the embodiment in Fig. 1,
Fig. 3 shows a perspective view at the back of the holding part,
Fig. 4 shows a perspective view slightly from above of a preferred embodiment according to the invention,
Fig. 5 shows a perspective view from behind of the mirror part of Fig. 4, and

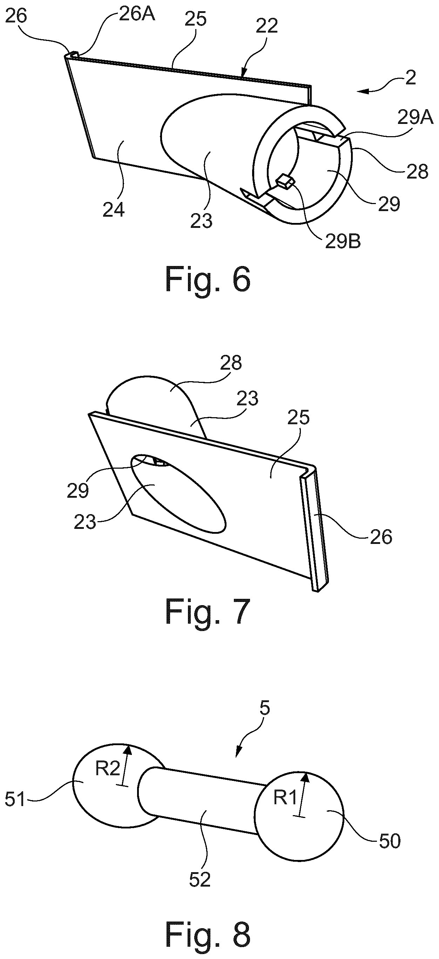

Fig. 6 shows a perspective view of the front of the holding part of the embodiment in Fig. 4,
Fig. 7 shows the back of the latter, and
Fig. 8 shows an intermediate attachment member.

### DETAILED DESCRIPTION

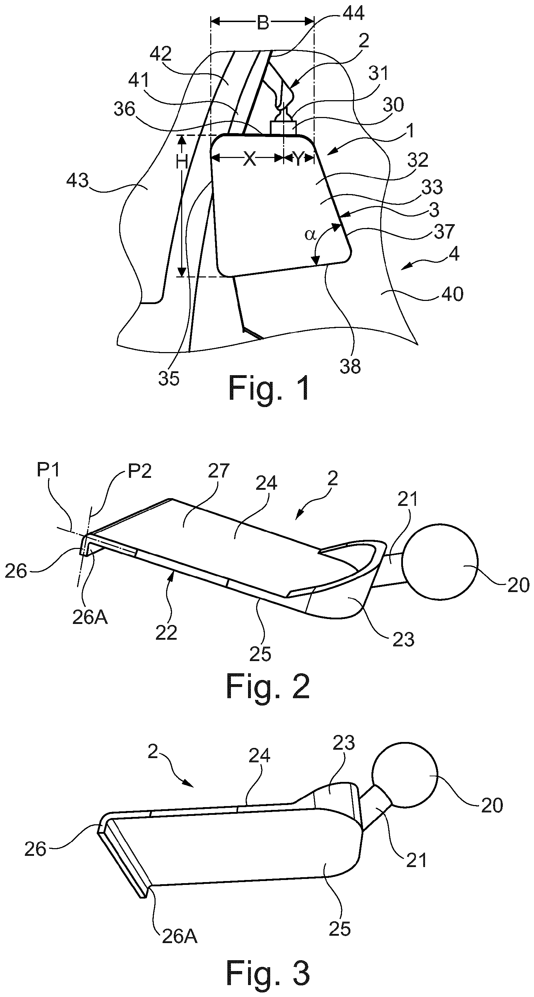

In Fig. 1 there is shown an indoor rear mirror arrangement 1 in accordance with a first embodiment of the invention. The arrangement 1 comprises a holding part 2 and a mirror part 3. The arrangement 1 is attached to a vehicle 4 having a front wind screen 43 a support beam 42 of the chassis, a front door frame part 41 and a side window 40. The arrangement is attached to the vehicle 4 by means of having clamped the holding part 2 into the groove 44 of the vehicle chassis housing the upper edge of the side window 40.

Accordingly, the arrangement 1 has been attached by first lowering the side window 40 and thereafter putting the holding part 2 of the arrangement 1 in contact with the inside of the side window 40, wherein the holding part 2 includes a clamping member 26 (see Figs. 2 and 3) in contact with the upper edge of the side window 40. When thereafter moving the window 40 upwardly the clamping member 26 of the holding part 2 will be securely clamped in the groove 44 by the window edge, in a secured manner.

The mirror part 3 comprises a coupling member 30 having a fitting space 31 arranged to fittingly interact with an attachment ball 20 of the holding part 2. In a known manner the interacting fitting member 30 is preferably arranged to be appropriately resilient and preferably having some kind of stop positioning member (not shown) such that the mirror part 3 may easily be coupled together with the attachment ball 20 and thereby be securely fastened to the holding part 2 and preferably in a manner allowing adjustability of the mirror part 3 by rotation around the attachment ball 20.

In Figs. 2 and 3 there are shown perspective views of the holding part 2, i.e. of the front side and of the back side, respectively in accordance with the first embodiment. The holding part 2 comprises a main body 22 having a lower end, having the attachment ball 20 attached thereto. Preferably the attachment ball 20 is attached to a shaft 21, which by means of a support part 23 is fixedly attached to a main body 22 of the holding part 2. The main body 22 comprises a first body member 27 that is generally flat extending along a central plane P1. The first body member 27 has the support member 23 attached at the lower end, which supports the shaft 21 with the attachment ball 20. At the other end there is a second body member which provides the clamping member 26. The clamping member 26 extends along a transverse plane P2 in relation to the central plane P1, such that it forms an L together with the upper end part of the main body 27, and thereby presents a support surface 26A intended to be positioned in contact with the upper edge of a side window 40. Accordingly in a preferred embodiment there is an angle between the center plane P1 of the first body member 27 and the plane P2 of extension of the clamping member 26 that is about 90°. The first body member 27 has an inwardly facing surface 24 and an oppositely facing outwardly directed surface 25. The outward facing surface 25 is adapted to be in close contact with the inner surface of the side window 40 e.g. being substantially flat to facilitate close contact. Preferably some kind of vibration damping layer (not shown) may be used and/or applied to the outwardly directed surface 25. In accordance with the embodiment shown the support part 23 may have a U-shape following the lower edge of the main body 22.

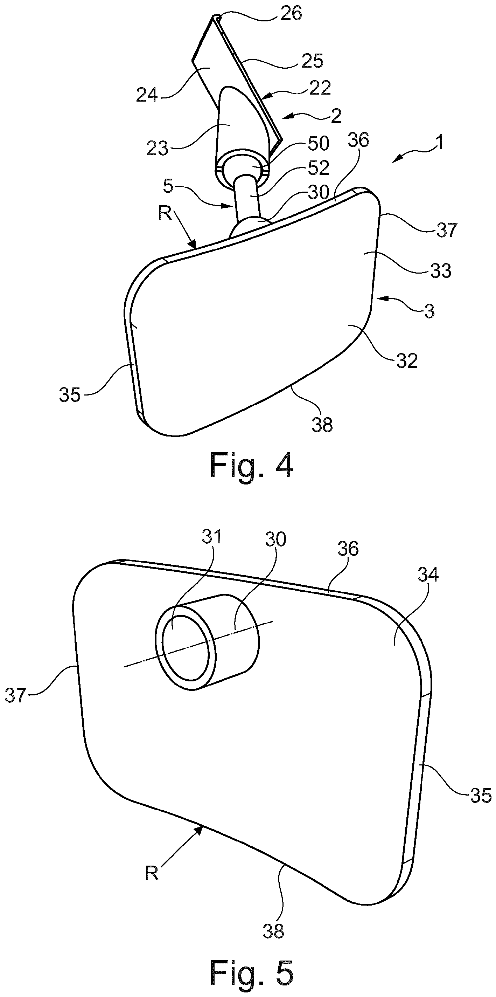

The mirror part 3 comprises a mirror side 32 (also see Fig. 4) having a layer 33 that provides the desired reflection to function as a mirror. The rear side 34 (see Fig. 5) preferably includes a layer that will assist in supporting/keeping the mirror layer in position, preferably also if the mirror layer 33 is being cracked.

The dimensions of the mirror part 3 of the first embodiment is such that the height H of the mirror along an inner side edge 35 is preferably larger than the width W along the upper edge 36 of the mirror part. Moreover, it is shown that preferably the lower end 38 of the edge of the mirror part 3 is longer than the upper mirror side edge 36. As a consequence, there will exist an acute angle α that is less than 90° between the lower edge 38 and the outer edge 37 of the mirror part 3. Thanks to this angle α it will be feasible to have the mirror in a more optimal position than if there is no use of an angle. Further it is shown that the coupling member 30 is positioned at a distance X away from the inner edge 35 that is larger than the distance Y to the upper part of the outer edge 37. Preferably the relation is such that 2Y≤X≤6.

In Fig. 4 it is shown a preferred embodiment wherein the mirror surface 33 is convex, such that there is arranged a radius R in the transverse direction of the mirror surface 33 within the range of 200 mm < R < 900 mm.

Further, an essential difference compared to the first embodiment is that preferably there is arranged an intermediate attachment member 5, which intermediate attachment member 5 is arranged with attachment balls 50, 51 at each end of a shaft-like portion 53. The attachment balls 50, 51 are arranged to be attached to one each of the holding part 2 and rear mirror part 3, respectively. Accordingly, the holding part 2 is arranged with a support part 23 that includes a coupling member 28 having a cavity 29 intended to receive and hold an outer attachment ball 50 intended for that connection. By means of providing attachment in the form of an attachment ball 50 there will be enabled adjustability by rotating the shaft 5 into different angles in relation to the holding part 2. Likewise the inner attachment ball 51 is arranged to be coupled with the coupling part 30 of the mirror part 3 and in a similar manner providing for adjustability for the mirror part 3.

The mirror part 3 in this preferred embodiment preferably has a larger width W than the height H, thereby providing a wider view field. It is to be noted that in this preferred embodiment the coupling member 30 is positioned adjacent the center of the upper edge 35 of the mirror part 3, which provides the advantage that there will be achieved a balance effect regarding gravitational influence of the mirror part 3. As a consequence, the gripping force around the ball may be less strong in this preferred embodiment than if the coupling part 30 is attached off center in relation to the center of gravity.

As is evident in most features of the rear mirror 1 is substantially the same as has been described in relation to the first embodiment and therefore not being described in more detail.

Further, it is evident for the skilled person there may be a variety of modifications within the scope of the invention as understood from the scope of claim 1. For instance it is evident that the basic function of the invention may be achieved without using ball joints. Actually the basic function of the invention will be fulfilled if no adjustability at all is provided.

## Claims

1. Indoor rear-view mirror (1) for use within a vehicle, comprising a holding part (2) and a mirror part (3), which are arranged to be attached to each other, wherein said mirror part (3) comprises a mirror side (32) and a rear side (34) and said holding part (2) comprises a clamping member (26) arranged to be attached to a part (40, 41) of said vehicle (4), **characterized in that** said clamping member (26) is arranged to be attached to said vehicle (4) by being clamped by means of a side window (40).

2. Indoor rear-view mirror (1) according to claim 1, wherein said clamping member (26) forms a second body member of a holding main body (22), which holding main body (22) also comprises a first body member (27) and that said clamping member (26) together with a part of said first body member (27) forms an L shape.

3. Indoor rear-view mirror (1) according to claim 2, wherein said clamping member (26) is arranged with a clamping support surface (26A) arranged to be in contact with an upwardly facing edge of said side window (40), and preferably that said first body member (27) has a second support surface (25) arranged to provide support adjacent said clamping support surface (26A).

4. Indoor rear-view mirror (1) according to claim 2 or 3, wherein said first body member (27) is arranged with an outward facing surface (25) adapted to be in close contact with the inner surface of the side window (40).

5. Indoor rear-view mirror (1) according to any preceding claim, wherein said mirror part (3) is attached, preferably releasably, to said holding part (2), directly or indirectly, by means of an attachment ball (20, 51), preferably enabling adjustability of said mirror part (3) by rotation.

6. Indoor rear-view mirror (1) according to claim 5, wherein said mirror part (3) is attached to said holding part (2) by means of an attachment ball (20, 51) arranged at one of a shaft member (21, 52).

7. Indoor rear-view mirror (1) according to claim 6, wherein said shaft member (52) forms a separate intermediate attachment member (5), arranged with a second attachment ball (50) at a second end thereof, and wherein said second attachment ball (50) enables adjustability by rotation of said intermediate attachment member (5) in relation to said holding part (2).

8. Indoor rear-view mirror (1) according to any preceding claim, wherein said holding part adjacent an opposite end in relation to said clamping member (26) is arranged with a support part (23).

9. Indoor rear-view mirror (1) according to claim 8, wherein said support part (23) includes a coupling member (28) arranged with a cavity (29) arranged to fit an attachment ball (50).

10. Indoor rear-view mirror (1) according to claim 8, wherein said support part (23) has a shaft member (21) fixedly attached thereto.
